# EUROPÄISCHE PATENTSCHRIFT

(11) **EP 2 215 954 B1**
(45) Veröffentlichungstag und Bekanntmachung des Hinweises auf die Patenterteilung: **17.05.2017**
(21) Anmeldenummer: 09005447.9
(22) Anmeldetag: 17.04.2009
(51) Int. Cl.: A47L 15/42

(54) **Geschirrspüler mit Wärmepumpe**
Dishwasher with heat pump
Lave-vaisselle doté d'une pompe à chaleur

(30) Priorität: 09.02.2009 EP 09001756
(43) Veröffentlichungstag der Anmeldung: 11.08.2010
(73) Patentinhaber: V-Zug AG, CH-6301 Zug (CH)
(72) Erfinder: Werner, Jürg, 8908 Hedingen (CH); Dober, Ernst, 6036 Dierikon (CH)
(74) Vertreter: Sutter, Kurt

(56) Entgegenhaltungen:
- EP-A- 1 864 603
- EP-A- 1 917 899
- DE-A1- 2 326 246
- DE-A1- 3 048 268
- DE-U1-202007 017 077
- JP-A- 10 080 391

## Beschreibung

Die Erfindung betrifft einen Geschirrspüler sowie ein Verfahren zu dessen Betrieb gemäss Oberbegriff der unabhängigen Ansprüche.

Um die Energieeffizienz von Geschirrspülern zu verbessern, wurde u.a. vorgeschlagen, einen Wärmetauscher vorzusehen, welcher dazu dient, dem Bottich Wärme zu entziehen und sie dem Frischwasser zuzuführen.

Darüber hinaus wurden in EP 1 864 603 und und JP 10080391 Geschirrspüler mit Wärmepumpen vorgeschlagen, um die Effizienz des Geräts zu verbessern.

Aufgabe der vorliegenden Erfindung ist es, die Energieeffizienz eines Geschirrspülers weiter zu verbessern. Diese Aufgabe wird von den unabhängigen Ansprüchen gelöst. Demgemäss wird eine Wärmepumpe mit mindestens einem Kondensator und mindestens einem Verdampfer eingesetzt, mit denen dem Prozesswasser oder dem Bottich Wärme entzogen und/oder zugeführt werden kann.

Vorzugsweise wird der Kondensator bzw. (falls mehrere Kondensatoren vorhanden sind) mindestens einer der Kondensatoren und/oder der Verdampfer bzw. (falls mehrere Verdampfer vorhanden sind) mindestens einer der Verdampfer an einer Wand des Bottichs angeordnet, insbesondere dieser Wand entlang verlaufend, wodurch in einfacher Weise, d.h. ohne spezielle Wärmetauschvorrichtungen etc., ein direkter Wärmeeintrag bzw. ein direkter Wärmeentzug ermöglicht wird. Unter "Wand" des Bottichs ist dabei eine vertikale Wand des Bottichs, dessen Decke sowie auch dessen Boden zu verstehen.

Anspruchsgemäss wird das Prozesswasser in an sich bekannter Weise mit einer Umwälzpumpe aus dem Sumpf unterhalb des Bottichs über ein Umpump-Leitungssystem in Sprüharme des Geschirrspülers gefördert. Es ist mindestens ein Kondensator an der Umwälzpumpe angeordnet, um dort das Prozesswasser zu erwärmen. Diese Ausgestaltung hat den Vorteil, dass an der Bottichwand und insbesondere am Bottichboden komplizierte Strukturen, welche potenziell schwierig zu reinigen sind und/oder den Ablauf des Wassers behindern, entfallen können. Der Kondensator wird mindestens teilweise an der Pumpenkammer der Umwälzpumpe angeordnet, da dort eine grosse Strömungsgeschwindigkeit herrscht, so dass die Wärme mit hoher Effizienz an das Prozesswasser übertragen werden kann.

Hierzu ist der Kondensator an der Wand der Pumpenkammer angeordnet. Dabei weist er
mindestens eine Rohrleitung auf,
- welche mäanderformig verläuft und gerade Abschnitte aufweist, welche an einer zylinderförmig um eine Drehachse des Flügelrads angeordneten Wand der Pumpkammer angeordnet sind, oder
- welche in einer Helix an der Pumpkammer angeordnet ist, wobei die Helix koaxial zur Drehachse des Flügelrads angeordnet ist,
oder der erste Kondensator weist eine Kammer auf, welche zylinderförmig um die Pumpkammer angeordnet ist.

In einer weiteren vorteilhaften Ausführung wird der Verdampfer bzw. (falls mehrere Verdampfer vorhanden sind) mindestens einer der Verdampfer thermisch mit dem Ablaufbereich gekoppelt, durch welchen Wasser vom Bottich nach Gebrauch an die Kanalisation abgegeben wird. So kann dem Abwasser Wärme entzogen werden.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine erste Ausführung eines Geschirrspülers,
Fig. 2 eine zweite Ausführung eines Geschirrspülers mit nur einem Verdampfer,
Fig. 3 eine dritte Ausführung eines Geschirrspülers mit nur einem Verdampfer,
Fig. 4 eine vierte Ausführung eines Geschirrspülers mit Überbrückungsventil,
Fig. 5 eine fünfte Ausführung eines Geschirrspülers mit zusätzlicher Zirkulationspumpe,
Fig. 6 eine sechste Ausführung eines Geschirrspülers mit Abwassertank,
Fig. 7 eine siebte Ausführung eines Geschirrspülers mit koaxialem Wärmetauscher,
Fig. 8 einen Schnitt durch das Abwasserrohr einer weiteren Ausführung,
Fig. 9 eine achte Ausführung des Geschirrspülers mit einem Kondensator an der Umwälzpumpe,
Fig. 10 eine erste Ausführung der Umwälzpumpe,
Fig. 11 einen Teil des Pumpengehäuses einer zweiten Ausführung der Umwälzpumpe,
Fig. 12 eine dritte Ausführung der Umwälzpumpe und
Fig. 13 einen Schnitt durch die Pumpkammer der Umwälzpumpe von Fig. 12.

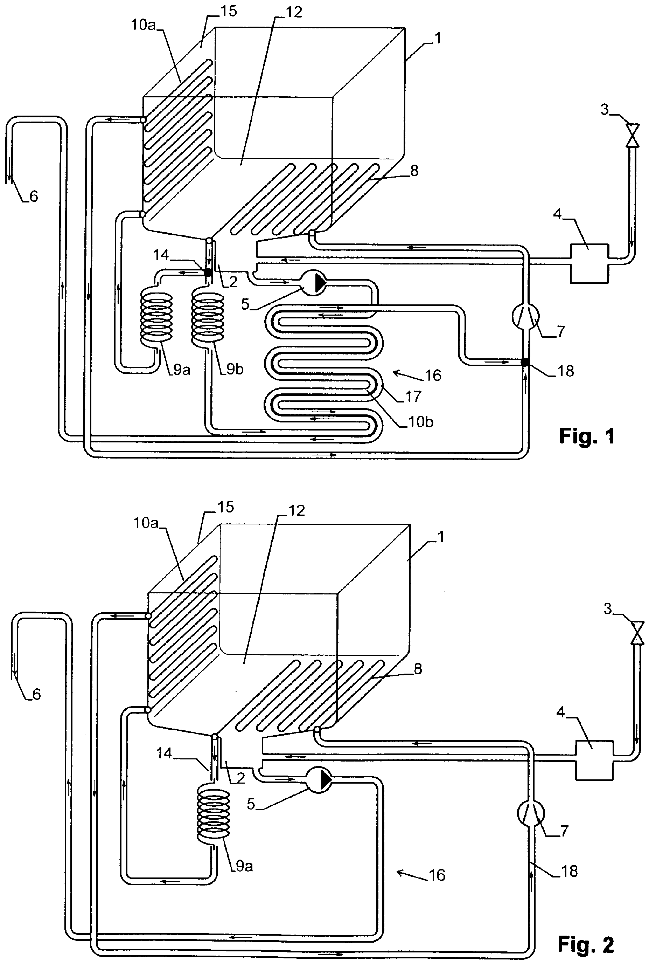

Der in Fig. 1 schematisch dargestellte Geschirrspüler besitzt einen Bottich 1 zur Aufnahme des Spülguts, wie z.B. Besteck, Geschirr oder dergleichen. Weiter besitzt der Geschirrspüler in bekannter Weise (nicht gezeigt) Sprüharme sowie eine Zirkulationspumpe zum Umpumpen von Prozesswasser aus dem Sumpf 2 in die Sprüharme. Das Spülgut ist in einem oder mehreren Geschirrkörben gelagert. Eine Steuerung kontrolliert und steuert die Operationen aller Komponenten. Ein derart ausgestaltetes Gerät ist dem Fachmann bekannt.

Frischwasser wird dem Gerät über ein Frischwasserventil 3 und einen Enthärter 4 zugeführt. Gebrauchtes Wasser wird von einer Ablaufpumpe 5 in eine Abwasserleitung 6 abgepumpt. Auch diese Komponenten sind dem Fachmann grundsätzlich bekannt.

Der Geschirrspüler besitzt weiter eine Wärmepumpe umfassend einen Kompressor 7, von welchem ein Wärmepumpenmedium zu einem oder mehreren Kondensatoren 8 gepumpt wird, wo unter Abgabe von Wärme eine Verflüssigung stattfindet. Vom Kondensator 8 gelangt das Medium über mindestens ein Expansionsventil 9a, 9b zu mindestens einem Verdampfer 10a, 10b, wo das Medium unter Aufnahme von Wärme verdampft. Vom Verdampfer 10a, 10b läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist ein erster Kondensator 8 am Boden 12 des Bottichs angeordnet und mit diesem in direktem, Wärme leitenden Kontakt und/oder auf der Innenseite der Bottichwand angeordnet, so dass der Boden 12 resp. das Prozesswasser im Bereich des Kondensators 8 erwärmt werden kann.

Weiter sind in der in Fig. 1 gezeigten Ausführung zwei Verdampfer 10a, 10b vorgesehen, wobei jedem davon jeweils ein eigenes Expansionsventil 9a, 9b zugeordnet ist. Weiter ist vor den Expansionsventilen eine Weiche 14 vorgesehen, um das gepumpte Medium wahlweise dem einen oder dem anderen Verdampfer 10a bzw. 10b zuzuführen.

Der erste Verdampfer 10a ist thermisch mit dem Bottich 1 gekoppelt, vorzugsweise indem er an einer ersten Seitenwand 15 desselben angeordnet ist. Somit kann mit dem ersten Verdampfer 10a der Bottich 1 und insbesondere die genannte Seitenwand 15 gekühlt werden.

Der zweite Verdampfer 10b ist thermisch mit einem Ablaufbereich 16 des Geräts gekoppelt, wobei der Begriff "Ablaufbereich" einen Bereich kennzeichnet, durch welchen das Wasser vom Bottich 1 nach Gebrauch an die Abflussleitung 6 abgegeben wird. Somit kann mit dem zweiten Verdampfer 10b dem Ablaufbereich 16 und insbesondere dem dort vorhandenen Wasser Wärme entzogen werden.

Konkret besteht der Ablaufbereich 16 in der Ausführung nach Fig. 1 aus einem Ablaufrohr 17, an oder in welchem der rohrförmige zweite Verdampfer 10b entlang geführt ist, wobei das Ablaufrohr 17 und der zweite Verdampfer 10b thermisch miteinander verbunden sind. Um die Interaktionslänge zwischen Verdampfer 10b und Ablaufrohr 17 zu verlängern und die Menge des im Ablaufbereich 16 speicherbaren Wassers auf mindestens etwa die Menge des während einer Prozessphase benötigen Wassers, d.h. mindestens etwa 3 Liter, zu erhöhen, sind Ablaufrohr 17 und der Verdampfer 10b vorzugsweise mäanderförmig oder spiralförmig verlegt. Um den Wärmetransfer zu verbessern, läuft das Wasser im Ablaufrohr 17 vorzugsweise in entgegen gesetzter Richtung zum Medium im zweiten Verdampfer 10b.

Das Medium vom ersten Verdampfer 10a und vom zweiten Verdampfer 10b wird in einem Kombinationsventil oder einen zweiten Weiche 18 vor dem Kompressor 7 wieder zusammengeführt .

Die Funktionsweise des Geräts ist wie folgt:
1. Zu Beginn einer Hauptreinigungsphase wird Frischwasser über das Frischwasserventil 3 eingelassen.
2. Gleichzeitig wird die Wärmepumpe gestartet, mit dem Ziel, Wärmeenergie aus dem Wasser im Ablaufbereich 16 dem Bottich 1 zuzuführen. Hierzu wird die Weiche 14 so eingestellt, dass der zweite Verdampfer 10b in Betrieb ist. Die Wärmepumpe wird abgeschaltet, wenn die Temperatur des Wassers im Ablaufbereich eine Schwelle, z.B. 5°C, unterschreitet. Erreicht die Temperatur im Bottich bzw. im Reinigungswasser dabei einen vorgegebenen Wert (je nach Programm z.B. zwischen 40° und 60°C) nicht, so kann zusätzlich elektrisch geheizt werden, entweder gleichzeitig mit oder nach dem Heizen mittels Wärmepumpe.
3. Am Ende der Hauptreinigungsphase wird das Wasser aus dem Bottich in den Ablaufbereich 16 abgelassen. Dort ersetzt es das Wasser, welches durch die Wärmepumpe in Schritt 2 abgekühlt wurde.
4. Über Frischwasserventil 3 wird neues Frischwasser für eine Zwischenspülphase eingelassen.
5. Die Wärmepumpe wird wieder in Gang gesetzt, um die Wärme vom Ablaufbereich 16 in den Bottich 1 zu fördern. Wiederum wird dabei das Wasser im Ablaufbereich 16 höchstens auf die erwähnte Schwelle von z.B. 5°C abgekühlt. Gleichzeitig wird die Zirkulationspumpe, welche Wasser vom Sumpf 2 in die Sprüharme fördert, vorzugsweise mindestens zeitweise mit geringer Leistung betrieben, und zwar derart, dass Wasser ohne Beaufschlagung des Spülguts aus dem unteren Sprüharm fliesst. Somit wird erreicht, dass das Wasser die Wärme vom ersten Kondensator 8 aufnehmen kann, ohne dass dabei das Spülgut vom kalten Wasser abgekühlt wird. Sobald die Wärme vom Ablaufbereich 16 getauscht ist, wird das Spülgut zwischengespült und sodann die Zwischenspülphase beendet.
6. Das Wasser aus dem Bottich 1 wird wiederum abgepumpt und ersetzt das kalte Wasser im Ablaufbereich 16.
7. Über Frischwasserventil 3 wird neues Frischwasser für eine Glanzspülphase (Klarspülphase) eingelassen.
8. Die Wärmepumpe wird wieder in Gang gesetzt, um die Wärme vom Ablaufbereich 16 in den Bottich 1 zu fördern. Wiederum wird die Zirkulationspumpe, welche Wasser vom Sumpf 2 in die Sprüharme fördert, vorzugsweise mindestens zeitweise mit geringer Leistung betrieben, damit das Wasser zwar umgepumpt wird, ohne aber das Spülgut zu beaufschlagen. Sobald die Wärme vom Ablaufbereich 16 getauscht ist, und gegebenenfalls nach optionaler elektrischer Zusatzbeheizung, wird das Spülgut glanzgespült und sodann die Glanzspülphase beendet. Das Glanzspülwasser kann an den Ablaufbereich 16 abgegeben werden.
9. Nun startet die Trockenphase. Die Weiche 14 wird umgeschaltet, so dass nun der erste Verdampfer 10a im Kreislauf liegt, nicht aber der zweite Verdampfer 10b. Die Wärmepumpe wird gestartet. Somit wird der Boden 12 des Bottichs 1 vom Kondensator 8 erwärmt, während die Seitenwand 15 vom Verdampfer 10a abgekühlt wird. Dadurch entsteht ein Konvektionsstrom im Bottich 1, indem Luft über dem Kondensator 8 aufgewärmt wird und aufsteigt. Diese Luft durchströmt das Spülgut und trocknet dieses. Die Luft kommt sodann mit der Seitenwand 15 in Kontakt, wo sie abgekühlt wird, so dass ihr Wasser entzogen wird. Das auskondensierte Wasser läuft der Seitenwand 15 entlang nach unten und gelangt in den Sumpf 2.

Die Konvektion in Schritt 9 kann verstärkt werden, indem, wie gezeigt, der Kondensator 8 nur an einem von der ersten Seitenwand 15 abgewandten Bereich des Bodens 12 angeordnet ist.

Aus dem obigen Prozessablauf ist ersichtlich, dass die Wärmepumpe zwei Zwecken dient. Einerseits wird sie dazu verwendet, Wärme aus dem Ablaufbereich 16 in den Bottich 1 bzw. das dort vorhandene Wasser zu transferieren. Weiter wird sie dazu eingesetzt, der Luft im Bottich 1 während der Trocknung Wasser zu entziehen. Dabei werden die beiden Verdampfer 10a und 10b alternativ eingesetzt. Indem jedem Verdampfer ein eigenes Expansionsventil 9a bzw. 9b zugeordnet ist, können die Expansionsventile den Grössen und gewünschten Betriebstemperaturen der beiden Verdampfer optimal angepasst werden. Zudem kann in diesem Fall die Weiche 14 im Hochdruckbereich angeordnet werden, wo deren Strömungswiderstand eine kleinere Rolle spielt. Es ist allerdings auch denkbar, nur ein gemeinsames Expansionsventil für beide Verdampfer 10a, 10b vorzusehen.

Im obigen Beispiel wird in den Schritten 5 und 8 Wärme aus der jeweilig vorhergehenden Prozessphase in die laufende Prozessphase transferiert. Je nach Zahl der Prozessphasen können auch weitere solche Schritte stattfinden. Dabei wird jeweils am Ende der Prozessphase das abgekühlte Wasser im Ablaufbereich 16 mit gebrauchtem, warmem Wasser ersetzt.

Denkbar ist es auch, in der Trockenphase zumindest zeitweise den zweiten Verdampfer 10b zu betreiben, entweder zusammen (parallel) oder alternierend zum ersten Verdampfer, um so dem Bottich 1 noch weiter Wärme aus dem Ablaufbereich 16 zuzuführen.

Die beiden oben genannten Funktionen der Wärmepumpe (Trocknungsprozess und Wärmetransfer) können auch einzeln eingesetzt werden. So zeigt Fig. 2 eine einfachere Ausführung eines Geschirrspülers, bei welcher lediglich der erste Verdampfer 10a vorhanden ist. Der zweite Verdampfer 10b ist weggelassen, wodurch sich die Konstruktion vereinfacht. In diesem Fall wird die Wärmepumpe lediglich dazu eingesetzt, die Trocknung zu unterstützen.

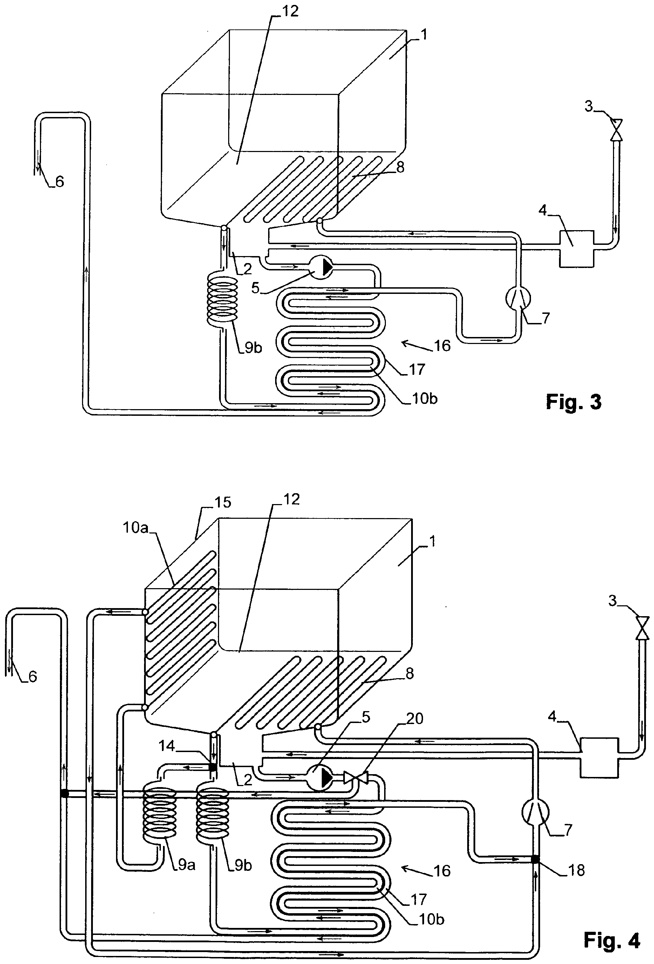

Entsprechend ist in Fig. 3 eine alternative Ausführung dargestellt, bei welcher lediglich der zweite Verdampfer 10b vorhanden und der erste Verdampfer 10a weggelassen ist. Wiederum vereinfacht sich die Konstruktion. In diesem Fall wird die Wärmepumpe dazu eingesetzt, Wärme von einer Prozessphase in eine spätere Prozessphase zu transferieren.

Eine weitere Ausführung ist in Fig. 4 dargestellt. Hier ist ein Überbrückungsventil 20 vorgesehen, mit welchem Wasser vom Bottich 1 wahlweise unter Umgehung des Ablaufbereichs 16 aus dem Gerät an die Abflussleitung 6 abgegeben werden kann. Dadurch wird es möglich, einen Wärmetransfer zwischen zwei Prozessphasen durchzuführen, selbst wenn diese durch eine dritte Prozessphase getrennt sind. Insbesondere benötigt die Zwischenspülphase nicht unbedingt Wärme, so dass mit dem Aufbau gemäss Fig. 4 der oben beschriebene Prozessablauf dahingehend geändert werden kann, dass die Wärmepumpe in der Zwischenspülphase, d.h. in Schritt 5, nicht betrieben wird. Am Schluss der Zwischenspülphase wird das Wasser sodann nicht in den Ablaufbereich 16 abgegeben, sondern unter Umgehung des Ablaufbereichs 16 direkt an die Abflussleitung 6. Somit kann in der darauf folgenden Klarspülphase die Wärme aus dem heissen Wasser der Hauptreinigungsphase in den Bottich gepumpt werden. Dadurch wird ein unnötiger Wärmeverlust vermieden. Ausserdem kann die Zwischenspülphase verkürzt werden, da kein Wärmetransfer erforderlich ist.

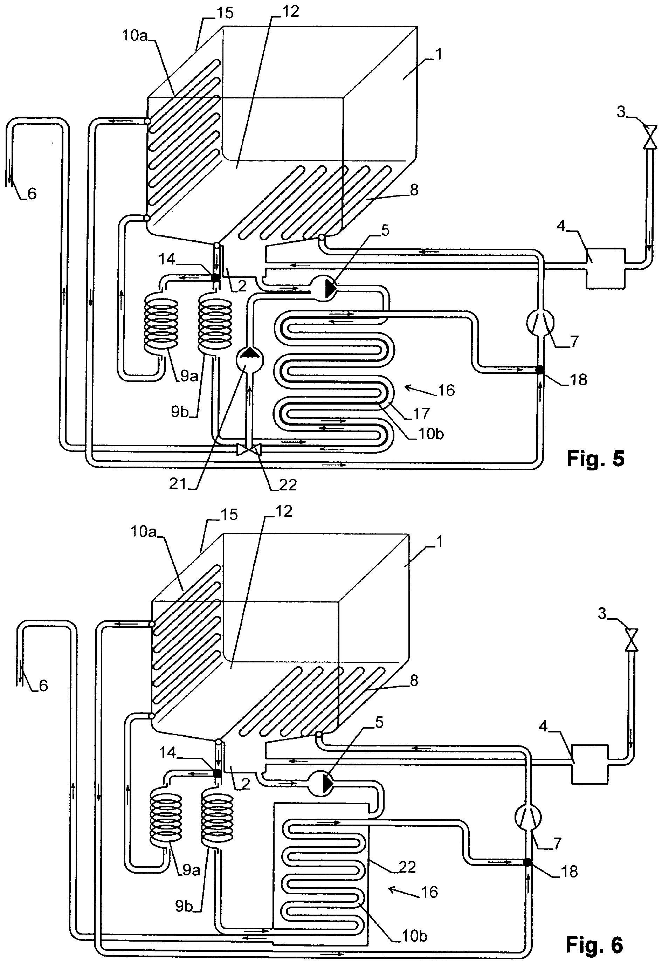

Eine weitere Ausführung des Geschirrspülers ist in Fig. 5 dargestellt. Hier ist eine zusätzliche Zirkulationspumpe 21 sowie ein Umschaltventil 22 am Ende des Ablaufbereichs 16 vorgesehen, so dass das Wasser im Ablaufbereich 16 umgepumpt werden kann. Dadurch kann der Wärmetransfer zwischen dem zweiten Verdampfer 10b und dem Wasser im Ablaufbereich 16 beschleunigt werden.

In der Ausführung nach Fig. 6 wird das Wasser im Ablaufbereich durch einen Tank 22 geführt. Der Tank 22 übernimmt dabei die Speicheraufgabe des Ablaufrohrs 17, zeichnet sich aber durch eine bessere Raumnutzung aus. Allerdings sollte in diesem Fall darauf geachtet werden, dass der Tank 22 so ausgestaltet wird, dass beim Nachfliessen von neuem Abwasser eine möglichst geringe Durchmischung mit dem alten Abwasser stattfindet. Zudem muss der Tank 22 so ausgestaltet werden, dass sich möglichst wenige Verschmutzungen ablagern können. Bei Verwendung eines Ablaufrohrs 17 ist die Gefahr einer Durchmischung sowie einer Verschmutzungsablagerung grundsätzlich geringer.

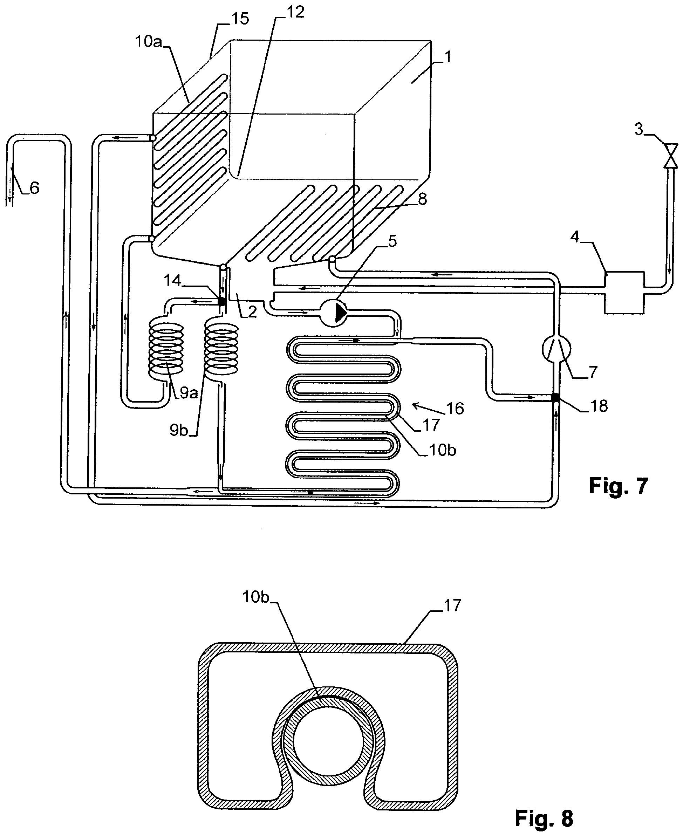

In der Ausführung nach Fig. 7 verlaufen die Leitung des zweiten Verdampfers 10b und das Ablaufrohr 17 nicht nebeneinander, sondern der Verdampfer 10b ist mindestens teilweise vom Ablaufrohr 17 umschlossen.

Eine bevorzugte Konstruktion dieses Wärmetauschers ist in Fig. 8 dargestellt. Wie ersichtlich, ist der Verdampfer 10b in einer längs verlaufenden Ausnehmung des Ablaufrohrs 17 angeordnet. Vorzugsweise ist das Ablaufrohr dabei als Kunststoff-Blasteil ausgestaltet und drückt sich elastisch gegen den Verdampfer 10b.

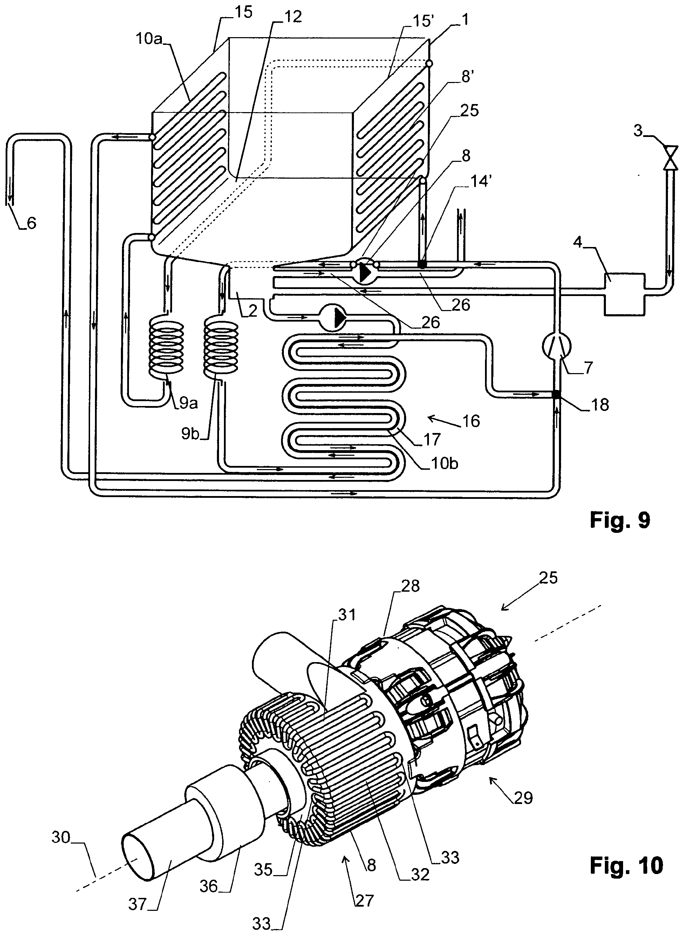

Eine weitere Ausführung wird in Fig. 9 dargestellt, welche einige wichtige weitere Prinzipen illustriert, die im Folgenden erläutert werden.

In Fig. 9 ist eine Umwälzpumpe 25 dargestellt, mit welcher das Prozesswasser vom Sumpf 2 unterhalb des Bottichs 1 über ein Umpump-Leitungssystem 26 in die Sprüharme des Geschirrspülers gefördert wird.

Der erste Kondensator 8 gemäss dieser Ausführung ist an der Umwälzpumpe 25 angeordnet. Denkbar ist jedoch auch eine mindestens teilweise Anordnung am Sumpf 2 und/oder a Umpump-Leitungssystem 26. Er dient wiederum dazu, dem Prozesswasser während der Reinigungsphase Wärme zuzuführen. Während dieser Phase wird das Prozesswasser durch den Sumpf 2, die Pumpe 25 sowie das Umpump-Leitungssystem 26 gefördert, so dass sie dort gezielt erwärmt werden kann.

Um die Wärmepumpe in diesem Fall auch während der Trockenphase einsetzen zu können, kann zusätzlich an einer Wand des Bottichs 1 ein zweiter Kondensator 8' vorgesehen sein. Dieser ist in der Trockenphase zusammen mit dem ersten Verdampfer 10a in Betrieb, um der Prozessluft in der oben beschriebenen Weise Wasser zu entziehen.

Wie in Fig. 9 dargestellt, ist der zweite Kondensator 8' an einer zweiten Seitenwand 15' angeordnet, welche der ersten Seitenwand 15 mit dem ersten Verdampfer 10a gegenüber liegt, so dass eine gute Konvektion erzeugt werden kann. Die Anordnung des zweiten Kondensators 8' an einer Seitenwand hat zudem den Vorteil, dass der zweite Kondensator das Wasser, welches in der Trockenphase über den Boden 12 abläuft, nicht erwärmt, sondern seine Wärme gezielt an die Prozessluft abgibt.

Vorzugsweise sind der erste Kondensator 8 und der zweite Verdampfer 10b in Serie angeordnet, mit dazwischen liegendem Expansionsventil 9b, so dass das Kühlmedium während der Reinigungsphase durch den ersten Kondensator 8 und den zweiten Verdampfer 10b geführt werden kann, um so Wärme aus dem Ablaufbereich 16 in das Prozesswasser zu fördern.

Wie aus Fig. 9 weiter ersichtlich, kann zwischen dem Kompressor 7 und dem ersten und dem zweiten Kondensator 8 bzw. 8' eine Weiche 14' angeordnet sein, um das gepumpte Medium wahlweise dem ersten und dem zweiten Kondensator 8 bzw. 8' zuzuführen.

Wie erwähnt, wird der erste Kondensator 8 in der Ausführung nach Fig. 9 vorzugsweise an der Umwälzpumpe 25 angeordnet. Eine mögliche Ausgestaltung der Pumpe 25 mit dem ersten Kondensator 8 ist in Fig. 10 dargestellt.

Der Aufbau der Pumpe entspricht dabei ungefähr jenem gemäss DE 20 2007 017 077 U1. Insbesondere besitzt die Pumpe ein Gehäuse 28, in welchem eine Pumpkammer 27 angeordnet ist. In der Pumpkammer 27 befindet sich ein Flügelrad (in den Figuren nicht sichtbar), welches von einem Motor 29 um eine Drehachse 30 gedreht wird. Zum diesbezüglichen Aufbau der Pumpe wird beispielsweise auf Fig. 2 von DE 20 2007 017 077 U1 verwiesen.

Die Pumpkammer 27 besitzt eine zylindrische, zur Drehachse 30 konzentrisch angeordnete Wand 31. In der Ausführung nach Fig. 10 verläuft der grösste Teil der Rohrleitung des ersten Kondensators 8 mäanderförmig an der Wand 31. Dabei besitzt die Rohrleitung eine Vielzahl gerader Abschnitte 32 parallel zur Drehachse 30, welche über U-förmig gebogene Abschnitte 33 miteinander verbunden sind.

In der Ausführung nach Fig. 10 erstreckt sich die Rohrleitung des Kondensators 8 bis in die achsiale, senkrecht zur Drehachse 30 stehende Abschlusswand 35 der Pumpkammer 27, wodurch der Wärmeaustausch verbessert werden kann. Denkbar ist es jedoch auch, dass die Rohrleitung des Kondensators nur an der zylindrischen Wand 31 der Pumpkammer 27 angeordnet ist.

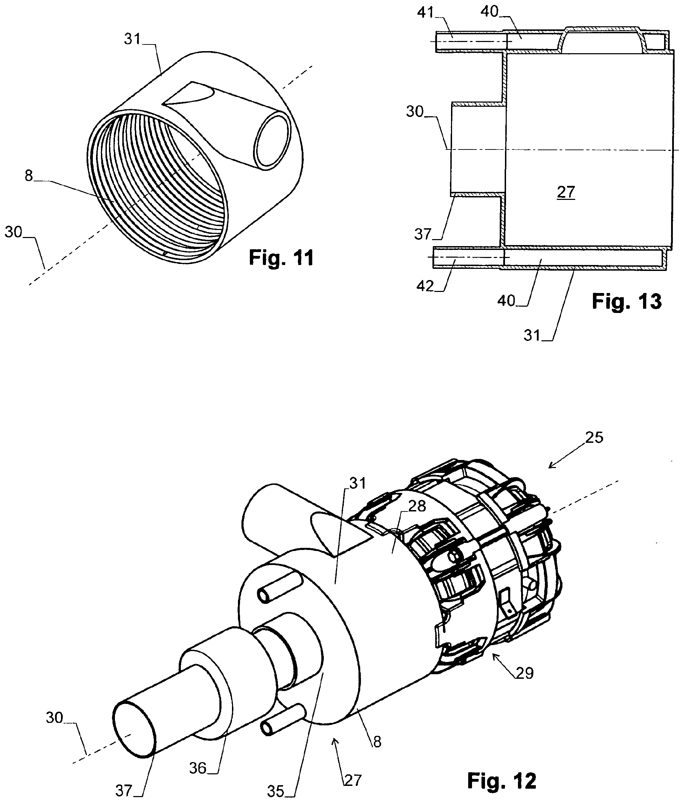

Die Rohrleitung des Kondensators 8 kann, wie in Fig. 10 dargestellt, aussen an der Wand der Pumpkammer 27 angeordnet sein, oder (wie im Folgenden in Fig. 11 gezeigt) an deren Innenseite.

Eine weitere Ausführung der Umwälzpumpe 25 ist in Fig. 11 dargestellt, welche lediglich die zylindrische Wand 31 der Pumpkammer 27 zeigt. Hier verläuft die Rohrleitung des Kondensators 8 in einer Helix entlang der Zylindrischen Wand 31. Die Helix ist koaxial zur Drehachse 30 angeordnet.

Fig. 12 und 13 zeigen schliesslich eine dritte Ausführung der Umwälzpumpe 25. Diese entspricht im Wesentlichen jener gemäss Fig. 10, mit dem Unterschied, dass der Kondensator 8 als Kammer 40 im Gehäuse 28 ausgestaltet ist. Die Kammer 40 erstreckt sich zylindrisch um die Pumpkammer 27. Zur Bildung der Kammer 40 ist die Wand des Gehäuses 28 der Pumpkammer doppelwanding ausgeführt. Das Medium wird über einen ersten Anschlussstutzen 41 in die Kammer 40 eingeführt und über einen zweiten Anschlussstutzen 42 wieder abgeleitet.

Zusätzlich zum ersten Kondensator 8 kann an der Umwälzpumpe 25 und/oder am Umpump-Leitungssystem 26 eine resistive Heizung vorgesehen sein, d.h. eine Heizung, welche Wärme erzeugt, indem ein elektrischer Strom durch einen Widerstand geführt wird. Eine derartige Heizung erlaubt es z.B., das Wasser bei Bedarf schneller oder auf höhere Temperaturen aufzuheizen, als dies mit dem Kondensator 8 alleine möglich wäre. In der Ausführung nach Fig. 10 und 12 ist diese Heizung unter Bezugsziffer 36 dargestellt und manschettenförmig um ein Ansaugrohr 37 gelegt, durch welches das Wasser in die Umwälzpumpe 25 angesogen wird.

## Patentansprüche

1. Geschirrspüler mit einem Bottich (1) zur Aufnahme von Spülgut, wobei er eine Wärmepumpe aufweist, wobei die Wärmepumpe mindestens einen Kondensator (8) und mindestens einen Verdampfer (10a, 10b) aufweist, welche derart angeordnet sind, dass dem Prozesswasser oder dem Bottich (1) Wärme entzogen und/oder zugeführt werden kann, wobei der Geschirrspüler weiter eine Umwälzpumpe (25) aufweist, um Prozesswasser aus einem Sumpf (2) unterhalb des Bottichs (1) über ein Umpump-Leitungssystem (26) in Sprüharme des Geschirrspülers zu fördern, wobei die Umwälzpumpe (25) eine Pumpkammer (27) aufweist, in welcher ein Flügelrad zum Fördern des Prozesswassers angeordnet ist,
**dadurch gekennzeichnet, dass** mindestens ein erster Kondensator (8) an der Pumpkammer (27) der Umwälzpumpe (25) angeordnet ist, und
dass der erste Kondensator (8) mindestens eine Rohrleitung aufweist,
- welche mäanderformig verläuft und gerade Abschnitte (32) aufweist, welche an einer zylinderförmig um eine Drehachse (30) des Flügelrads angeordneten Wand (31) der Pumpkammer (27) angeordnet sind, oder
- welche in einer Helix an der Pumpkammer (27) angeordnet ist, wobei die Helix koaxial zur Drehachse (30) des Flügelrads angeordnet ist, oder
dass der erste Kondensator (8) eine Kammer (40) aufweist, welche zylinderförmig um die Pumpkammer (27) angeordnet ist.

2. Geschirrspüler nach Anspruch 1, wobei der erste Kondensator (8) mindestens eine Rohrleitung aufweist, welche mäanderformig verläuft und gerade Abschnitte (32) aufweist, welche an einer zylinderförmig um eine Drehachse (30) des Flügelrads angeordneten Wand (31) der Pumpkammer (27) angeordnet sind, und wobei sich die Rohrleitung bis in eine senkrecht zur Drehachse (30) stehende Abschlusswand (35) der Pumpkammer (27) hinein erstreckt.

3. Geschirrspüler nach einem der vorangehenden Ansprüche, wobei an der Umwälzpumpe (25) und/oder am Umpump-Leitungssystem (26) zusätzlich zum ersten Kondensator (8) eine resistive Heizung (36) angeordnet ist.

4. Geschirrspüler nach einem der vorangehenden Ansprüche, wobei zusätzlich ein zweiter Kondensator (8') an einer Wand des Bottichs (1), insbesondere an einer Seitenwand (15') des Bottichs (1) angeordnet ist.

5. Geschirrspüler nach Anspruch 4, wobei die Wärmepumpe einen Kompressor (7) aufweist, und wobei zwischen dem Kompressor (7) und dem ersten und dem zweiten Kondensator (8, 8') eine Weiche (14') angeordnet ist, um ein gepumptes Medium wahlweise dem ersten und dem zweiten Kondensator (8, 8') zuzuführen.

6. Geschirrspüler nach einem der vorangehenden Ansprüche, wobei der Verdampfer (10b) bzw. mindestens einer der Verdampfer (10a 10b) thermisch mit einem Ablaufbereich (16) gekoppelt ist, wobei der Geschirrspüler dazu ausgestaltet ist, Wasser vom Bottich (1) nach Gebrauch durch den Ablaufbereich (16) abzugeben, und insbesondere wobei der Geschirrspüler einen ersten Verdampfer (10a) aufweist, der thermisch mit dem Bottich (1) gekoppelt ist und einen zweiten Verdampfer (10b) aufweist, der thermisch mit dem Ablaufbereich (16) gekoppelt ist.

7. Geschirrspüler nach Anspruch 6, wobei der Ablaufbereich (16) ein Ablaufrohr (17) aufweist, an oder in welchem der zweite Verdampfer (10b) entlang geführt ist, und insbesondere wobei das Ablaufrohr (17) und der zweite Verdampfer (10b) mäanderförmig oder spiralförmig verlegt sind.

8. Geschirrspüler nach einem der vorangehenden Ansprüche, wobei mindestens einer der Kondensatoren und/oder der Verdampfer (10a) bzw. mindestens einer der Verdampfer (10a, 10b) an einer Wand des Bottichs (1) angeordnet ist und insbesondere dieser Wand entlang verläuft.

9. Verfahren zum Betrieb des Geschirrspülers nach einem der vorangehenden Ansprüche, wobei mit der Wärmepumpe dem Prozesswasser oder dem Bottich (1) Wärme entzogen und/oder zugeführt wird, wobei die Wärme dem Prozesswasser zugeführt wird, indem der an der Umwälzpumpe (25) angeordnete erste Kondensator (8) erwärmt wird.

10. Verfahren nach Anspruch 9, wobei in einer Trockenphase mit der Wärmepumpe einem ersten Wandbereich, insbesondere dem einer Seitenwand (15'), des Bottichs (1) Wärme zugeführt und einem zweiten Wandbereich, insbesondere einer Seitenwand (15), Wärme entzogen wird und so ein Konvektionsstrom im Bottich (1) erzeugt wird.

11. Verfahren nach einem der Ansprüche 9 oder 10, wobei das Geschirr in mindestens einer ersten und einer zweiten Prozessphase gereinigt wird, wobei am Ende der ersten Prozessphase Prozesswasser auf dem Bottich (1) in einen Ablaufbereich geleitet wird und am Anfang der zweiten Prozessphase Frischwasser in den Bottich (1) geführt wird, wobei in der zweiten Prozessphase dem Prozesswasser im Ablaufbereich mit der Wärmepumpe Wärme entzogen und dem Prozesswasser im Bottich (1) zugeführt wird, und insbesondere wobei am Ende der zweiten Prozessphase das Prozesswasser vom Bottich (1) in den Ablaufbereich geführt wird und dort das Prozesswasser aus der ersten Prozessphase ersetzt.

## Claims

1. Dishwasher with a vat (1) for receiving items to be washed, having a heat pump, wherein the heat pump has at least a condenser (8) and at least an evaporator (10a, 10b), which are arranged in such a way that heat can be extracted from and/or supplied to the process water or to the vat (1), wherein the dishwasher has furthermore a circulation pump (25) for transporting water from a sump (2) below the vat (1) via a recirculation pipe system (26) into spraying arms of the dishwasher, wherein the circulation pump (25) has a pump chamber (27) inside which a blade wheel for transporting the process water is arranged,
**characterized in that** at least a first condenser (8) is arranged at the pump chamber (27) of the circulation pump (25), and
**in that** the first condenser (8) has at least a pipe
- which runs in a meander-shaped way and has straight sections (32), which are arranged at a wall (31) of the pump chamber (27) arranged cylindrically around a rotation axis (30) of the blade wheel, or
- which is arranged in a helix at the pump chamber (27), wherein the helix is arranged coaxially to the rotation axis (30) of the blade wheel, or
**in that** the first condenser (8) has a chamber (40) which is arranged in a cylindrical way around the pump chamber (27).

2. Dishwasher according to claim 1, wherein the first condenser (8) has at least a pipe running in a meander-shaped way and having straight sections (32), which are arranged at a wall (31) of the pump chamber (27) arranged cylindrically around a rotation axis (30) of the blade wheel, and wherein the pipe extends into a termination wall (35) of the pump chamber (27), which stands in a perpendicular way to the rotation axis (30).

3. Dishwasher according to one of the preceding claims, wherein a resistive heating (36) is arranged additionally to the first condenser (8) at the circulation pump (25) and/or at the recirculation pipe system (26).

4. Dishwasher according to one of the preceding claims, wherein additionally a second condenser (8') is arranged at a wall of the vat (1), particularly arranged at a sidewall (15') of the vat (1).

5. Dishwasher according to claim 4, wherein the heat pump has a compressor (7), and wherein a switch (14') is arranged between the compressor (7) and the first and the second condenser (8, 8'), in order to supply a pumped medium optionally to the first and the second condenser (8, 8').

6. Dishwasher according to one of the preceding claims, wherein the evaporator (10b) or at least one of the evaporators (10a, 10b) is thermally coupled to a discharge area (16), wherein the dishwasher is adapted to release water from the vat (1) after use through the discharge area (16), and particularly wherein the dishwasher has a first evaporator (10a), which is thermally coupled to the vat (1) and a second evaporator (10b) which is thermally coupled to the discharge area (16).

7. Dishwasher according to claim 6, wherein the discharge area (16) has a discharge pipe (17), at which or inside which the second evaporator (10b) is guided along, and particularly wherein the discharge pipe (17) and the second evaporator (10b) are installed in a meander-shaped or helical way.

8. Dishwasher according to one of the preceding claims, at least one of the condensers and/or the evaporator (10a) or at least one of the evaporators (10a, 10b), respectively, are arranged at a wall of the vat (1) and particularly run along this wall.

9. Method for operating the dishwasher according to one of the preceding claims, wherein heat is extracted from and/or supplied to the process water or the vat (1) by means of the heat pump, wherein the heat is supplied to the process water by heating up the first condenser (8) arranged at the circulation pump (25).

10. Method according to claim 9, wherein in a drying phase heat is supplied to a first wall section, particularly a sidewall (15'), of the vat (1) by means of the heat pump and heat is extracted from a second wall section, particularly a sidewall (15), and thereby a convection stream is generated in the vat (1).

11. Method according to one of the claims 9 or 10, wherein the dishes are washed in at least a first and a second process phase, wherein at the end of the first process phase process water is supplied from the vat (1) in a discharge area and at the beginning of the second process phase fresh water is guided into the vat (1), wherein in the second process phase heat is extracted from the process water in the discharge area by means of the heat pump and supplied to the process water in the vat (1), and particularly wherein at the end of the second process phase the process water is guided from the vat (1) into the discharge area and replaces there the process water from the first process phase.

## Revendications

1. Lave-vaisselle avec une cuve (1) pour recevoir de la vaisselle, ayant une thermopompe, la thermopompe ayant au moins un condenseur (8) et au moins un évaporateur (10a, 10b), qui sont arrangés de sorte que de la chaleur peut être extraite de et/ou alimentée dans l'eau de processus ou dans la cuve (1), le lave-vaisselle ayant de plus une pompe de circulation (25) pour transporter de l'eau d'un puisard (2) au-dessous de la cuve (1) par un système de tuyaux de recirculation (26) dans des bras de pulvérisation du lave-vaisselle, la pompe de circulation (25) ayant une chambre de pompe (27) dans laquelle une roue à aubes pour transporter l'eau de processus est arrangée,
**caractérisé en ce qu'**au moins un premier condenseur (8) est arrangé à la chambre de pompe (27) de la pompe de circulation (25), et
**en ce que** le premier condenseur (8) a au moins un tuyau
- qui s'étend en forme de méandre et qui a des sections droites (32) qui sont arrangées à une paroi (31) de la chambre de pompe (27) arrangée de manière cylindrique autour d'un axe de rotation (30) de la roue à aubes, ou
- qui s'étend en hélix à la chambre de pompe (27), l'hélix étant arrangé de manière coaxiale par rapport à l'axe de rotation (30) de la roue à aubes, ou
**en ce que** le premier condenseur (8) a une chambre (40) arrangée de manière cylindrique autour de la chambre de pompe (27).

2. Lave-vaisselle selon la revendication 1, le premier condenseur (8) ayant au moins un tuyau qui s'étend en forme de méandre et qui a des sections droites (32) qui sont arrangées à une paroi (31) de la chambre de pompe (27) arrangée de manière cylindrique autour d'un axe de rotation (30) de la roue à aubes, et le tuyau s'étendant dans une paroi de terminaison (35) de la chambre de pompe (27), qui est posée de manière perpendiculaire par rapport à l'axe de rotation (30).

3. Lave-vaisselle selon l'une des revendications précédentes, un chauffage résistif (36) étant arrangé en plus du premier condenseur (8) à la pompe de circulation (25) et/ou au système de tuyaux de recirculation (26).

4. Lave-vaisselle selon l'une des revendications précédentes, un deuxième condenseur (8') étant arrangé en outre à une paroi de la cuve (1), particulièrement arrangé à une paroi latérale (15') de la cuve (1).

5. Lave-vaisselle selon les revendications 4, la thermopompe ayant un compresseur (7), et un commutateur (14') étant arrangé entre le compresseur (7) et le premier et le deuxième condenseur (8, 8'), afin d'alimenter un médium pompé optionnellement au premier et au deuxième condenseur (8, 8').

6. Lave-vaisselle selon l'une des revendications précédentes, l'évaporateur (10b) ou au moins un des évaporateurs (10a, 10b) étant thermiquement couplé à une zone de décharge (16), le lave-vaisselle étant adapté à libérer de l'eau de la cuve (1) après usage à travers la zone de décharge (16), et particulièrement le lave-vaisselle ayant un premier évaporateur (10a) qui est thermiquement couplé à la cuve (1) et un deuxième évaporateur (10b) qui est thermiquement couplé à la zone de décharge (16).

7. Lave-vaisselle selon la revendication 6, la zone de décharge (16) ayant un tuyau de décharge (17), auquel ou dans lequel le deuxième évaporateur (10b) est guidé, et particulièrement le tuyau de décharge (17) et le deuxième évaporateur (10b) étant installés en forme de méandre ou d'hélix.

8. Lave-vaisselle selon l'une des revendications précédentes, au moins un des condenseurs et/ou l'évaporateur (10a) ou bien au moins un des évaporateurs (10a, 10b) étant arrangés à une paroi de la cuve (1) et particulièrement s'étendant le long de cette paroi.

9. Procédé pour l'opération d'un lave-vaisselle selon l'une des revendications précédentes, de la chaleur étant extraite de et/ou alimentée dans l'eau de processus ou la cuve (1) avec la thermopompe, la chaleur étant alimentée à l'eau de processus en chauffant le premier condenseur (8) arrangé à la pompe de circulation (25).

10. Procédé selon la revendication 9, de la chaleur étant alimentée en une première zone de paroi, particulièrement d'une paroi latérale (15') (12), de la cuve (1) à l'aide de la thermopompe dans une phase de séchage et de la chaleur étant extraite d'une deuxième zone de paroi, particulièrement une paroi latérale (15), cela créant un courant de convection dans la cuve (1).

11. Procédé selon la revendication 9 ou 10, la vaisselle étant nettoyée dans une première et une deuxième phase du processus, de l'eau de processus étant transmise sur la cuve (1) dans une zone de décharge à la fin de la première phase du processus et de l'eau fraîche étant guidée dans la cuve (1) au début de la deuxième phase du processus, de la chaleur étant extraite de l'eau de processus dans la zone de décharge à l'aide de la thermopompe et étant transmise à l'eau de processus dans la cuve (1), et particulièrement à la fin de la deuxième phase de processus l'eau de processus étant transmise de la cuve (1) dans la zone de décharge et remplaçant là-bas l'eau de processus de la première phase de processus.
